Europäisches Patentamt

European Patent Office

Office européen des brevets

(11) Publication number: **0 161 820**
**A1**

# EUROPEAN PATENT APPLICATION

Application number: **85302696.1**

Date of filing: **17.04.85**

(51) Int. Cl.⁴: **C 09 K 11/80**

Priority: **26.04.84 GB 8410665**

Date of publication of application: **21.11.85**
**Bulletin 85/47**

Designated Contracting States: **DE GB NL**

(71) Applicant: **EMI Limited, Blyth Road, Hayes Middlesex, UB3 1BP (GB)**

(72) Inventor: **Bulpett, Sheila Elizabeth, 8, Grenville Avenue, Wendover Buckinghamshire, HP22 6AG (GB)**
Inventor: **Green, Bernard Jeffrey, 103, Welldon Crescent, Harrow Middlesex (GB)**

(74) Representative: **Marsh, Robin Geoffrey, Thorn EMI Patents Limited The Quadrangle Westmount Centre Uxbridge Road, Hayes Middlesex, UB4 0HB (GB)**

(54) **Cathodo luminescent phosphors.**

(57) A cathodo luminescent phosphor has a chemical composition of specific proportions of Yttrium, Gadolinium, Praseodymium, Gallium and Aluminium. The phosphor has improved light emitting properties for use on the screen of a cathode ray tube; the emission spectrum of the phosphor is based on all three primary colours.

: 1 :

# CATHODO LUMINESCENT PHOSPHORS

This invention relates to cathodo luminescent phosphors suitable for forming a light emissive coating on the screen of a cathode ray tube.

A known cathodo luminescent phosphor is terbium activated yttrium oxy-sulphide (the EIA Designation of this phosphor is P45, the WTDS Designation is W13). This material, when subjected to electron bombardment - in a cathode ray tube, for example - emits "white" light but, in practice, proves to be rather unsatisfactory since the emission spectrum is based predominantly on two primary colours only - blue and green.

It is the object of this invention to provide a cathodo luminescent phosphor having improved light emitting properties.

Accordingly there is provided a cathodo luminescent phosphor having the chemical composition (expressed in atomic proportions),

$$(Y_{3-x-y} \; Gd_x \; Pr_y) \; (Ga_{5-z} \; Al_z) \; O_{12}$$

where $\quad 0.0001 \leqslant y \leqslant 0.5$

$$0 \leqslant x \leqslant 3-y$$

and $\quad 0 \leqslant z < 5$

The symbols Y, Gd, Pr, Ga and Al have their conventional meanings, namely Yttrium, Gadolinium, Praseodymium, Gallium and Aluminium respectively.

The inventors have discovered that a Praseodymium activated phosphor defined in accordance with this invention is particularly beneficial since the emission spectrum is based on all three primary colours.

In a preferred composition z is not greater than 4.5 and in a particularly useful composition z = 0 or z = 2.5. In a further preferred composition x = 0 or x = 3 - y.

According to another aspect of the present invention there is provided a cathode ray tube wherein the screen is provided with a coating of a cathodo luminescent phosphor having a chemical composition (expressed in atomic proportions)

$$(Y_{3-x-y} \, Gd_x \, Pr_y) \, (Ga_{5-z} \, Al_z) \, O_{12}$$

where
$$0.0001 \leqslant y \leqslant 0.5$$
$$0 \leqslant x \leqslant 3-y$$
and
$$0 \leqslant z < 5.$$

In order that the invention may be carried readily into effect specific compositions, and their manner of manufacture, are now described in Examples I to VI.

Example I

Gadolinium Oxide (52.87 gms), Gallium Oxide (46.35 gms), Praseodymium Oxide (0.84 gms) and a flux, Barium Fluoride (5 gms) in isopropanol (150 ml) were milled in a ball mill for 19 hrs. at 70 r.p.m.

The slurry, thus formed, was filtered and the residue dried at $100^\circ C$ for 2 hrs. and then fired at $1530^\circ C$ for 16 hrs in a closed alumina crucible. After cooling the formed cake was removed from the crucible and milled for a further 4 hrs. at 70 r.p.m. with isopropanol (150 ml). The slurry was then washed to remove the flux, dried and the resulting powder sieved (BS 53 $\mu$m mesh) and bottled. The approximate yield was 65 g of powder, the formula of which was determined to be $(Gd_{2.95} \, Pr_{0.05}) \, Ga_5 \, O_{12}$.

Example II

The procedure of Example I was repeated using, in place of Praseodymium activated Gadolinium oxide, Praseodymium (1.12g of the oxide) activated Yttrium (32.04g) and Gadolinium (19.4g) oxides and, in place of Gallium oxide, a mixture of Gallium (30.82g) and Aluminium (16.82g) oxides. The formula of the product was determined to be $(Y_{2.15} Gd_{0.8} Pr_{0.05})(Al_{2.5})(Ga_{2.5}) O_{12}$.

Example III

The procedure of Example I was repeated using, in place of Praseodymium activated Gadolinium Oxide, Praseodymium (2.095g of the oxide) activated Yttrium Oxide (40.29g) together with Gallium Oxide (57.67g). The formula of the product was determined to be $(Y_{2.9} Pr_{0.1}) Ga_5 O_{12}$.

Example IV

The procedure of Example I was repeated using, in place of Praseodymium Activated Gadolinium Oxide, Praseodymium (6.206g of the oxide) activated Yttrium Oxide (37.04g) together with Gallium Oxide (56.94g). The formula of the product was determined to be $(Y_{2.7} Pr_{0.3}) Ga_5 O_{12}$.

Example V

The procedure of Example I was repeated using in place of Gallium Oxide, a mixture of Gallium (25.69g) and Aluminium (14.09g) oxides together with Gadolinium Oxide (58.69g) and Praseodymium Oxide (1.32g). The formula of the product was determined to be $(Gd_{2.93} Pr_{0.07}) (Al_{2.5} Ga_{2.5}) O_{12}$.

Example VI

The procedure of Example I was repeated using Gadolinium Oxide (53.63g), Gallium Oxide (46.29g) and Praseodymium Oxide (0.083g). The formula of the product was determined to be $(Gd_{2.995} Pr_{0.005}) Ga_5 O_{12}$.

It will be appreciated that the present invention is not limited to the compositions of Examples I to V and encompasses cathodo luminescent phosphors having the general formula

$$(Y_{3-x-y} Gd_x Pr_y) (Ga_{5-z} Al_z) O_{12}$$

0161820

where      $0.0001 \le y \le 0.5$

$0 \le x \le 3-y$

and      $0 \le z < 5.$

Praseodymium activated cathodo luminescent phosphors in accordance with the present invention are found to exhibit particularly useful light emissive properties since the emission spectrum is based predominantly on the three primary colours. The major emissions are found to be 488 nm, 561 nm and 618 nm with relative luminous intensities 100%, 85% and 55% respectively.  In contrast, a hithertoknown cathodo luminescent phosphor, Yttrium oxy-sulphide, activated with terbium exhibits only two major emissions at $\sim$ 420 nm and 545 nm.

A phosphor in accordance with this invention can be used to form the light emissive coating on the screen of a cathode ray tube (CRT) or alternatively of a liquid crystal (LC)/cathode ray tube (CRT) hybrid display.  If a colour display is desired an appropriate colour filter can be used in conjunction with the CRT display or the LC/CRT hybrid display.  LC/CRT hybrid displays are described, for example, in SID Digest of Technical Papers 1982 by M.C. Clark & I.A. Shanks, or SID Digest of Technical Papers - 1983 by R. Vatne, P.A. Johnson Jr. and B.J. Bos.  The phosphor also finds application in the screen of a Flying Spot Scanner for a telecine.

## CLAIMS

1. A cathodo luminescent phosphor having the chemical composition (expressed in atomic proportions)

$$(Y_{3-x-y} \; Gd_x \; Pr_y) \; (Ga_{5-z} \; Al_z) \; O_{12}$$

where $0.0001 \leqslant y \leqslant 0.5$

$0 \leqslant x \leqslant 3-y$

and $0 \leqslant z < 5.$

2. A cathodo luminescent phosphor according to Claim 1 wherein z is not greater than 4.5.

3. A cathodo luminescent phosphor according to Claim 1 or Claim 2 wherein x = o or x = 3-y.

4. A cathodo luminescent phosphor according to Claim 1 or Claim 2 or Claim 3 wherein z = 0.

5. A cathode ray tube including a light emissive coating of a cathodo luminescent phosphor according to any one of Claims 1 to 4.

6. A cathode ray tube according to Claim 5 including a screen in the form of a liquid crystal.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 282 856 (H.J. BORCHARDT) * Column 4, lines 3-13; columns 11,12 * | 1 | C 09 K 11/80 |

-----

|  |  |  | TECHNICAL FIELDS SEARCHED (Int. Cl.4) |
|---|---|---|---|
|  |  |  | C 09 K 11/00 |

The present search report has been drawn up for all claims

| Place of search | Date of completion of the search | Examiner |
|---|---|---|
| THE HAGUE | 31-07-1985 | DROUOT M.C. |